# EUROPEAN PATENT APPLICATION

(11) **EP 2 657 824 A2**
(43) Date of publication of application: **30.10.2013**
(21) Application number: 13164805.7
(22) Date of filing: 23.04.2013
(51) Int. Cl.: G06F 3/0481, G06F 3/0482, G06F 17/30

(54) **Method for displaying a plurality of electronic contents on a display of an electronic device controlled by a user interface**

(30) Priority: 28.04.2012 WO PCT/CN2012/074926
(71) Applicant: Orange, 75015 Paris (FR)
(72) Inventor: Guo, Zhihong, 100080 Beijing (CN); Han, Liang, 100080 Beijing (CN); Wang, Yanke, 100080 Beijing (CN)

(57) **Abstract**

The invention relates to a method for displaying a plurality of electronic contents on a display of an electronic device controlled by a user interface, said method comprising the steps of detecting a first input on a first specific element of the user interface, the detection of the first input triggering a selecting mode, while in the selecting mode, when detecting a plurality of second inputs on second specific elements of the user interface, selecting said second specific elements, each second specific element corresponding to an electronic content to be displayed, storing the selected second specific elements, detecting a third input on a third specific element of the user interface, the detection of the third input terminating the selecting mode, after terminating the selecting mode, displaying at least an electronic content corresponding to a first stored second specific element and detecting a fourth input on a fourth specific element of the user interface triggering the display of another electronic content corresponding to another stored second specific element.

## Description

The present invention generally relates to methods for displaying electronic contents on electronic devices.

Browsers have been developed for mobile devices, such as Smartphones, or tablets, such as the Dolphin Browser ©.

Such browsers allow the display of multiple electronic contents such as WebPages in multiple windows.

In known browsers, in order to display different electronic contents, a user selects the link pointing toward the electronic content they wish to access, e.g. an URL pointing toward a press article, by for example long pressing a specific area of a touch-screen device corresponding to the URL pointing toward the electronic content they wish to access. A menu is then displayed in which the user can select the function they want the electronic device to execute, i.e. opening the selected electronic content in a new window.

Those steps are repeated for all the electronic contents the user whishes to access.

In order to read or watch the selected electronic contents, the user can then switch between the different windows generated by the electronic device, each window corresponding to a selected electronic content, by selecting the tab corresponding to a given window in the tab area of the browser.

Such a solution is not user friendly since it relies on a repeating and interrupting procedure.

It is an objective of the present invention to overcome disadvantages and/or make improvements in the prior art.

To that extend, the present invention relates to a method for displaying a plurality of electronic contents on a display of an electronic device controlled by a user interface, said method comprising the steps of :
- detecting a first input on a first specific element of the user interface, the detection of the first input triggering a selecting mode,
- while in the selecting mode, detecting a plurality of second inputs on second specific elements of the user interface, each second specific elements corresponding to an electronic content to be displayed,
- storing the selected electronics content to be displayed,
- detecting a third input on a third specific element of the user interface, the detection of the third input terminating the selecting mode,
- after terminating the selecting mode displaying at least a first stored electronic content on the display,
- detecting a fourth input on a fourth specific element of the user interface triggering the display of another stored electronic content.

This method allows a user of an electronic device to select multiple links pointing towards electronic contents to be displayed within an electronic content already being displayed, e.g. a web page without a plurality of different windows opening.

The user of the electronic device can then access to the selected electronic contents and switch from a selected electronic content to another without switching between different windows.

This method improves the quality of experience of the user because they can selected the links pointing toward electronic contents they are interested in directly on the electronic content currently displayed, e.g. a webpage such as a webpage displaying search results, and they can easily switch between the different selected electronic contents.

The electronic device of the user can be for example a mobile phone, a Smartphone, a tablet, a laptop, an e-reader, etc.

The electronic device of the user comprises a display, and a user interface, such as a keyboard, or a keyboard and pointing means such as a mouse. In some embodiments of the invention, the display and the user interface can be one and the same, it is the case for example of touch-screens.

Thus, a specific element of the user interface can be a key of a key board, a combination of keys, a button of the pointing means, a specific area of a touch-screen, etc.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

The method of the invention further comprises, after storing the selected electronic contents, a step of generating a modified electronic content adapted to a resolution of the display of the electronic content.

The modified electronic content is fit to the resolution of the display of the electronic device. Modifying the electronic content eases the switching between the stored electronic contents when they are displayed.

The method of the invention further comprises a step of determining if a selected electronic content is already stored in a database, if not, a modified electronic content is generated.

Checking whether an electronic content has already been modified to adapt to the resolution of the display of the electronic device enables not generate a modified electronic content.

According to a characteristic of the method of the invention, the database is updated at regular time intervals:
Thus the updating of the database is automatic.

According to a characteristic of the method of the invention, the database is updated when a modified electronic content is generated.

The database stores electronic contents of interest for the user, this allows a customization of the database.

According to a characteristic of the method of the invention, the stored electronic contents are displayed in order of selection.

In this embodiment of the method of the invention, the selected electronic contents are displayed in order of selection, which corresponds to the user interest in the electronic contents.

According to a characteristic of the method of the invention, the stored electronic contents are displayed in order of appearance during the selection mode.

The electronic contents are displayed in the same order as the links pointing toward them are displayed on the webpage. For example, if the webpage displays results of a search executed by a search engine, the selected contents are displayed in the same order as the results of the search, i.e. the most relevant first.

The invention concerns also an electronic device comprising a display controlled by a user interface for displaying a plurality of electronic contents, the electronic device comprising :
- means for detecting a first input on a first specific element of the user interface, the detection of the first input triggering a selecting mode,
- means for detecting a plurality of second inputs on second specific elements of the user interface, while in the selecting mode, each second specific elements corresponding to an electronic content to be displayed,
- means for storing the selected electronics content to be displayed,
- means for detecting a third input on a third specific element of the user interface, the detection of the third input terminating the selecting mode,
- means for displaying, after terminating the selecting mode, at least a first stored electronic content on the display,
- means for detecting a fourth input on a fourth specific element of the user interface triggering the display of another stored electronic content.

Such an electronic device can be a mobile phone, a Smartphone, a tablet, a laptop, etc.

Another object of the invention relates to a system for displaying a plurality of electronic contents on a display of an electronic device controlled by a user interface, and a server communicating with the electronic device, wherein the electronic device comprises :
- means for detecting a first input on a first specific element of the user interface, the detection of the first input triggering a selecting mode,
- means for detecting a plurality of second inputs on second specific elements of the user interface, while in the selecting mode, each second specific elements corresponding to an electronic content to be displayed,
- means for transmitting an identifier of the selected electronic contents to the sever,
- means for detecting a third input on a third specific element of the user interface, the detection of the third input terminating the selecting mode,
- means for displaying, after terminating the selecting mode at least a first selected electronic content on the display,
- means for detecting a fourth input on a fourth specific element of the
   user interface triggering the display of another selected electronic content,
   and wherein the server comprises :
- means for receiving the identifiers of the selected electronic contents transmitted by the electronic device,
- means for storing the selected electronics content to be displayed,
- means for transmitting the stored electronic contents to the electronic device to be displayed.

In such an embodiment of the invention, the storing and generating a modified electronic content are executed by a remote server. Such a solution is less resource consuming because it contributes to lower the network traffic on the electronic device side.

Finally, one object of the invention concerns a computer program, in particular a computer program on or in an information medium or memory, suitable for implementing the method for wirelessly transferring data between a first and at least a second device by means of a radio signal of a pre-determined frequency object of the invention. This program can use any programming language, and be in the form of source code, binary code, or of code intermediate between source code and object code such as in a partially compiled form, or in any other desirable form for implementing the configuration method according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:
**FIG. 1** represents an electronic device capable of running the method of displaying a plurality of electronic contents object of the invention,
**FIG. 2** represents a diagram representing the steps of the method of the invention as experienced by the user,
**FIG. 3** represents a diagram representing the steps of the method of the invention when it is run by the electronic device,
**FIG. 4** represents an electronic device capable of running the method of the invention.

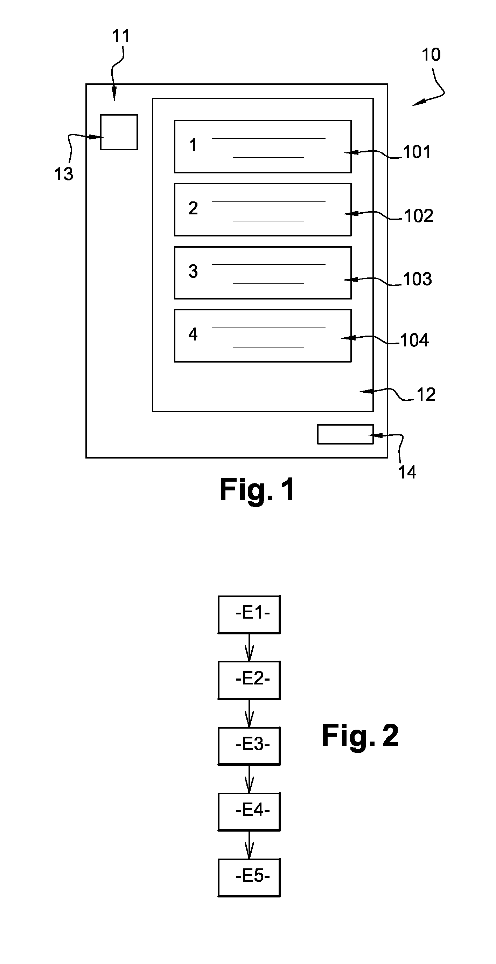

**Figure 1** represents an electronic device 10 comprising a graphical user interface 11, e.g. a touch-screen, acting both as a display and a user interface controlling the display.

The electronic device is capable of launching a browser or an application, such as for example a news application.

When the browser is running, the electronic device 10 displays a webpage 12 displaying for example links 1-4 corresponding to the results of a search executed by a search engine. The links 1-4 can be, for example, URL pointing toward different electronic contents such as press articles, videos, pictures, webpages, etc.

A first specific element 13 of the graphical user interface 11 is defined. In this embodiment of the invention the first specific element 13 is a specific area of the graphical user interface 11. The first specific element 13 can be displayed as a button.

A second specific element 14 of the graphical user interface 11 is defined.

The first and second specific elements 13, 14 of the graphical user interface 11 are located for example in two corners of the graphical user interface 11 when the graphical user interface 11 is of rectangular shape. The rest of the surface 12 of the graphical user interface 11 comprises four specific elements 101-104 of the graphical user interface 11, each of which corresponds to a link 1-4.

In other embodiments of the invention, the electronic device 10 comprises a display and a user interface distinct from each other. The user interface 11 can be a keyboard, or a keyboard and pointing means such as a mouse. Thus, a specific element of the user interface 11 can be a key of a key board, a combination of keys, a button of the pointing means, a specific area of a touch-screen, etc.

**Figure 2** shows a diagram representing the steps of the method of the invention as experienced by the user.

In a step E1, an electronic document is displayed on the graphical user interface 11. Such a document is for example a webpage comprising a plurality links pointing toward electronic contents such as videos, pictures, other webpages, etc.

The user of the electronic device 10 whishes to access at least one of the electronic contents associated to the links displayed on the graphical user interface 11.

In a step E2, the user touches the first specific element 13 of the graphical user interface 11, thus entering a selecting mode.

In a step E3, the user touches at least another second specific element 101-104 in order to select an electronic content to be displayed.

When the user has selected all the electronic contents to be displayed by touching the specific elements 101-104 of the graphical user interface 11 corresponding to said electronic contents, they touch again the first specific element 13 or another specific element of the graphical user interface 11, in a step E4, thus terminating the selecting mode.

A first selected electronic content is then displayed on the graphical user interface 11.

The user can access another selected electronic contents by touching, during a step E5, the second specific element 14. This touch gesture can be for example a slipping touch.

Step E5 can be repeated until the user has accessed to the different electronic contents.

This method improves the quality of experience of the user because they can selected the links pointing toward electronic contents they are interested in directly on the electronic content currently displayed, e.g. a webpage such as a webpage displaying search results, and they can easily switch between the different selected electronic contents.

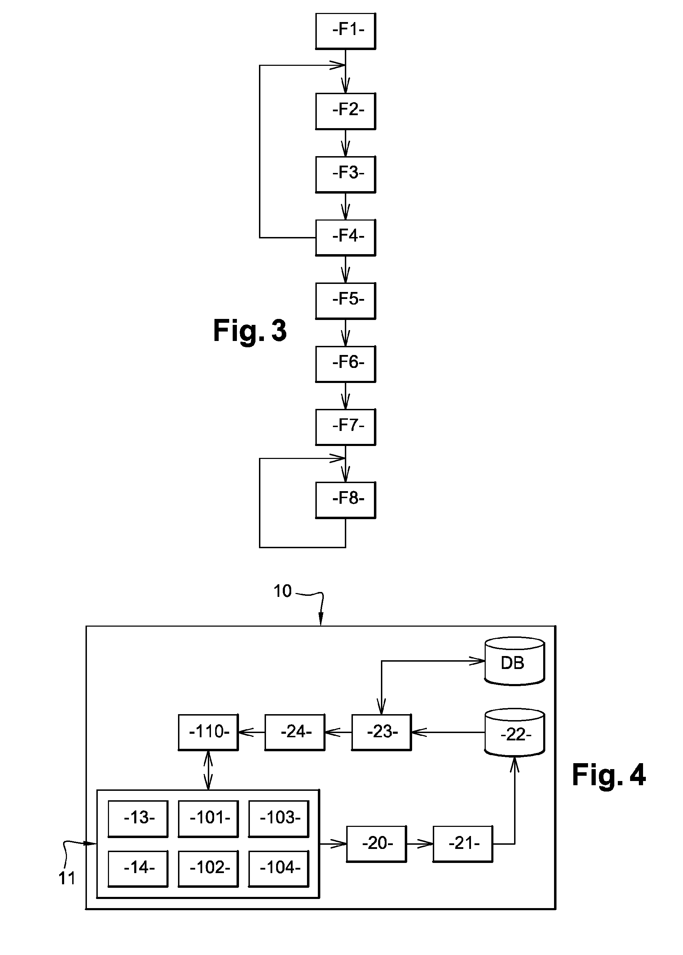

**Figure 3** shows a diagram representing the steps of the method of the invention when it is run by the electronic device 10.

An electronic content is displayed on the graphical user interface 11 of the electronic device 10. Such electronic document is for example a webpage displaying the result of a search executed by a search engine or the home page of an application such as a news application.

In a step F1, a first input on the first specific element 13 of the graphical user interface 11 is detected by detecting means of the electronic device 10. The detection of the first input triggers a selecting mode.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

In a step F2, a second input is detected on one the specific elements 101-104 of the graphical user interface 11. Each specific element 101-104 corresponds to an electronic content the user of the electronic device wishes to access.

In a step F3, the electronic content toward which the link associated to the specific element 101-104 for which an input is detected is downloaded and stored in storing means.

Such storing means can be embedded in the electronic device 10 or in a remote device, such as a dedicated server, communicating with the electronic device 10 through a communication network.

In a step F4, the electronic device 10 determines if a selected electronic content is adapted to the resolution of the graphical user interface 11. An electronic content is adapted to the resolution of the graphical user interface 11 if, for example, the content as the same length and width as the graphical user interface 11.

In order to determine whether or not an electronic content is to be modified, the electronic device 10 determines if the selected electronic content or a modified version of the electronic content is already stored in a database DB. If the electronic content is not stored in the database DB, a modified electronic content is generated during step a F5. The database DB can be embedded in the electronic device 10 or in the remote server.

Generating a modified electronic content can consist in resizing the electronic content to fit the size of the graphical user interface 11, generating a new layout of the electronic content taking into account layout parameters of the electronic content and the resolution of the graphical user interface 11, etc.

In an embodiment of the invention, the database DB is updated at regular time intervals.

In another embodiment of the invention, the database is updated when a modified electronic content is generated.

The steps F2 to F4 are executed for all the selected electronic contents.

In step F6, a third input on the first specific element 13 of the graphical user interface 11 is detected by the detecting of the electronic device 10. The detection of this third input terminates the selecting mode. The third input can be detected on another specific element of the graphical user interface 11 different from the first specific element 13. After terminating the selecting mode, the electronic device 10 displays a first stored electronic content on the graphical user interface 11, during a step F7.

In a step F8, the detecting means of the electronic device 10 detects a fourth input on the second specific element 14 of the graphical user interface 11 triggering the display of another stored electronic content. Such an input can be a swiping gesture.

The step F8 is executed each time the detecting means of the electronic device 10 detects an input on the second specific element 14 of the graphical user interface 11.

In a complementary embodiment, during the step F3, the electronic device 10 stores the second specific elements selected in step F2. The step of downloading and storing the electronic content corresponding to these selected second specific elements could be performed at the same time or later, for example during step F6 when terminating the selection mode, or according to electronic device 10 criteria such as availability or speed of the network connection.

**Figure 4** represents an electronic device 10 capable of executing the method for displaying a plurality of electronic contents objet of the invention.

Such an electronic device 10 comprises a display 110 controlled by a user interface 11. The user interface 11 can be for example a keyboard, or a keyboard and pointing means such as a mouse. In some embodiments of the electronic device 10, the display 110 and the user interface 11 can be one and the same, it is the case for example of touch-screens.

The user interface 11 comprises a plurality of specific elements 13, 14 and 101-104, each of them being involved in triggering the execution of a specific function by the electronic device 10 when activated by a user of the electronic device 10.

A specific element of the user interface 11 can be a key of a key board, a combination of keys, a button of the pointing means, a specific area of a touch-screen, etc. Connected to the user interface 11, the electronic device comprises means 20 for detecting an input on one of the specific elements 13, 14, 101-104 of the user interface 11.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

The detecting means 20 are connected to means 21 for downloading electronic contents selected using the specific elements 101-104 of the user interface 11.

The downloading means 21 are connected to storing means 22 in which the selected electronic contents are stored after being downloaded.

The storing means 22 are connected to means 23 for determining if a selected electronic content is adapted to the resolution of the display 110.

In order to determine whether or not an electronic content is to be modified, the determining means 23 determine if the selected electronic content is already stored in a database DB to which they are connected. If the electronic content is not stored in the database DB, a modified electronic content is generated by generating means 24 connected to the determining means and the display 110.

## Claims

1. Method for displaying a plurality of electronic contents on a display of an electronic device controlled by a user interface, said method comprising the steps of :
- detecting a first input on a first specific element of the user interface, the detection of the first input triggering a selecting mode,
- while in the selecting mode, when detecting a plurality of second inputs on second specific elements of the user interface, selecting said second specific elements, each second specific element corresponding to an electronic content to be displayed,
- storing the selected second specific elements,
- detecting a third input on a third specific element of the user interface, the detection of the third input terminating the selecting mode,
- after terminating the selecting mode, displaying at least an electronic content corresponding to a first stored second specific element,
- detecting a fourth input on a fourth specific element of the user interface triggering the display of another electronic content corresponding to another stored second specific element.

2. The method of claim 1 comprising, when storing the selected second specific elements, a step of downloading and storing the corresponding electronic content in a database.

3. The method of claim 1 or 2 comprising, before the step of displaying at least an electronic content corresponding to a first stored second specific element, a step of generating, from said electronic content, a modified electronic content adapted to a resolution of the display of the electronic content.

4. The method of claim 3, comprising a step of determining if a selected electronic content is already stored in a database, if not, a modified electronic content is generated.

5. The method of claim 4, wherein the database is updated at regular time intervals.

6. The method of claim 4, wherein the database is updated when a modified electronic content is generated.

7. The method of claim 1, wherein the stored electronic contents are displayed in order of selection.

8. The method of claim 1, wherein the stored electronic contents are displayed in order of appearance during the selection mode.

9. An electronic device comprising a display controlled by a user interface for displaying a plurality of electronic contents, the electronic device comprising :
- means for detecting a first input on a first specific element of the user interface, the detection of the first input triggering a selecting mode,
- while in the selecting mode, means for detecting a plurality of second inputs on second specific elements of the user interface, each selected second specific elements corresponding to an electronic content to be displayed,
- means for storing the selected second specific elements"
- means for detecting a third input on a third specific element of the user interface, the detection of the third input terminating the selecting mode,
- means for displaying, after terminating the selecting mode, at least an electronic content corresponding to a first stored second specific element on the display,
- means for detecting a fourth input on a fourth specific element of the user interface triggering the display of another electronic content corresponding to another stored second specific element.

10. An electronic device according to claim 9, further comprising means for downloading and storing in a database the electronic content corresponding to the selected second specific elements.

11. A system for displaying a plurality of electronic contents on a display of an electronic device controlled by a user interface, and a server communicating with the electronic device, wherein the electronic device comprises :
- means for detecting a first input on a first specific element of the user interface, the detection of the first input triggering a selecting mode,
- while in the selecting mode, means for detecting a plurality of second inputs on second specific elements of the user interface, each selected second specific elements corresponding to an electronic content to be displayed,
- means for transmitting an identifier of an electronic content corresponding to a selected second specific element to the server,
- means for detecting a third input on a third specific element of the user interface, the detection of the third input terminating the selecting mode,
- means for displaying, after terminating the selecting mode, at least an electronic content corresponding to a first stored second specific element, on the display,
- means for detecting a fourth input on a fourth specific element of the user interface triggering the display of another electronic content corresponding to another stored second specific element.,
and wherein the server comprises :
- means for receiving the identifiers of the electronic content corresponding to the selected second specific elements transmitted by the electronic device,
- means for storing the electronic content to be displayed, corresponding to the selected second specific elements,
- means for transmitting the stored electronic contents corresponding to the selected second specific elements to the electronic device to be displayed.

12. A computer program **characterized in that** it comprises program code instructions for the implementation of the steps of the method for displaying a plurality of electronic contents as claimed in claim 1 when the program is executed by a processor.
